# EUROPÄISCHE PATENTSCHRIFT

(11) **EP 4 083 428 B1**
(45) Veröffentlichungstag und Bekanntmachung des Hinweises auf die Patenterteilung: **24.07.2024**
(21) Anmeldenummer: 21171421.7
(22) Anmeldetag: 30.04.2021
(51) Int. Cl.: F04C 2/18, F04C 13/00, F04C 15/00

(54) **ZAHNRADPUMPE UND DEREN VERWENDUNG**
GEAR PUMP AND USE OF SAME
POMPE À ENGRENAGE ET SON UTILISATION

(43) Veröffentlichungstag der Anmeldung: 02.11.2022
(73) Patentinhaber: Maag Pump Systems AG, 8154 Oberglatt (CH)
(72) Erfinder: Triebe, René, 8603 Schwerzenbach (CH); Finkeldei, Marc, 5200 Brugg (CH)
(74) Vertreter: Rigling, Peter Daniel

(56) Entgegenhaltungen:
- EP-A1- 0 833 068
- DE-A1- 2 005 740
- DE-C1- 10 135 709
- US-A- 2 891 483

## Beschreibung

### TECHNISCHES GEBIET

Die vorliegende Erfindung betrifft eine Zahnradpumpe nach dem Oberbegriff von Anspruch 1 sowie eine Verwendung der Zahnradpumpe nach Anspruch 10.

### STAND DER TECHNIK

Zahnradpumpen bestehen im Wesentlichen aus einem Paar ineinandergreifender Zahnräder, die von einem Gehäuse umschlossen sind und von denen seitlich jeweils um die Längsachse angeordnete Lagerzapfen abstehen, die in Fördermedium-geschmierten Gleitlagern ihren Sitz haben.

Da Zahnradpumpen eine fördersteife Kennlinie besitzen, eignen sie sich besonders gut für den Transport von Fördermedien von einer Saug- auf eine Druckseite. Zwischen beiden letzteren entsteht aufgrund des geförderten Volumenstromes in den Folgeaggregaten ein Druckgefälle, welches bei hochviskosen Medien besonders gross ist und zu einer Kraftübertragung auf jedes Zahnrad führt.

Eine bekannte Zahnradpumpe ist beispielsweise in EP-1 790 854 A1 beschrieben, wobei es sich hierbei um eine Zahnradpumpe handelt, bei der ein Lagerzapfendurchmesser nahezu oder gleich einem Fusskreisdurchmesser der Verzahnung entspricht.

Die bekannten Zahnradpumpen haben Gleitlager, die mit dem Fördermedium geschmiert werden. An den Gleitlagern liegt auf der einen Seite der Zahnradpumpen-austrittsseitige hohe Druck an, wogegen hinter dem Gleitlager annähernd saugseitiger Druck der Zahnradpumpe herrscht, der deutlich niedriger ist als der Druck auf der Seite des Pumpenaustritts. Durch diese Druckdifferenz strömt Fördermedium, das für den Schmierfilmaufbau im Gleitlager benötigt wird, vom Pumpenaustritt in das Gleitlager. Eine Druckschmiernut in der Stirnseite des Gleitlagers bildet hierbei eine direkte Verbindung in das Gleitlager, um Fördermedium in einer Schmiernut im Gleitlager möglichst ungestört in das Gleitlager zu leiten.

Wird als Fördermedium eine Polymerschmelze verwendet, die zudem mit hohen Anteilen an Feststoffen oder mit Feststoffen oberhalb einer kritischen Grösse (Fremdpartikel) versetzt ist, stellt dies für eine ausreichende Schmierung im Gleitlager eine Schwierigkeit dar. Für eine gute Funktion der Gleitlager ist es wichtig, einen Schmierfilm aus Fördermedium aufzubauen. Gelangen zu viele oder zu grosse Fremdpartikel in den engen Schmierspalt zwischen Welle und Gleitlager, besteht die Gefahr eines Schadens am Gleitlager oder an der Welle, was zu einem Ausfall der Zahnradpumpe führt. Dies ist insbesondere bei einer Partikelgrösse der Fall, die grösser ist als die Höhe des Minimalschmierfilms, denn dies führt zu einer Unterbrechung des Schmiermittelflusses durch Verstopfung im Gleitlager und damit zu einem Ausfall der Zahnradpumpe. Ein erhöhter Durchfluss von Partikelbeladener Schmelze (Fördermedium) kann auch zu erhöhten abrasivem Verschleiss der Gleitlageroberflächen führen. Gelangt zu wenig Schmelze in das Gleitlager, besteht die Gefahr von Mangelschmierung.

Ferner können bei einem Polymer als Fördermittel nicht geschmolzene Polymerpartikel (kleine Klumpen), die über die Schmiernut in das Gleitlager gelangen, den Schmierstrom blockieren und zu einem Ausfall der Zahnradpumpe führen.

### ZUSAMMENFASSUNG DER ERFINDUNG

Es ist daher Aufgabe der vorliegenden Erfindung, eine Zahnradpumpe anzugeben, die mindestens einen der vorstehend genannten Nachteile nicht aufweist.

Diese Aufgabe wird durch die im Kennzeichen von Anspruch 1 angegebenen Merkmalen gelöst. Weitere Ausführungsformen der vorliegenden Erfindung sowie eine Verwendung sind in weiteren abhängigen Ansprüchen definiert.

Eine erfindungsgemässe Zahnradpumpe umfasst zunächst eine Zahnradpumpe mit ineinandergreifenden, von einem Gehäuse umschlossenen Zahnrädern mit auf Wellenachsen angeordneten, jeweils seitlich von den Zahnrädern abstehenden Lagerzapfen, die im Gehäuse mittels Gleitlager, aufweisend eine Gleitlagerlänge, gelagert sind, wobei die Gleitlager Fördermedium-geschmiert sind. Die vorliegende Erfindung zeichnet sich dadurch aus,
- dass in die Gleitlager jeweils eine Fülltasche mit radialer Ausdehnung im Bereich einer Pumpendruckseite eingearbeitet ist, wobei die Fülltasche von einer zahnradseitigen Stirnseite des jeweiligen Gleitlagers um einen Abstand beabstandet ist, so dass ein Steg mit einer Stegbreite mit axialer Ausdehnung entsprechend einer Gleitlageroberfläche bestehend ist, und
- dass in den Gleitlagern je eine Schmiernut mit, ausgehend von einem zahnradseitigen Ende hin zu einem Gleitlagerende, einem verjüngenden Querschnitt vorhanden ist, wobei die Schmiernut zahnradseitig bei der Fülltasche beginnt und mit dieser kommuniziert.

Die erfindungsgemässe Zahnradpumpe ist damit im Vergleich zu bekannten Zahnradpumpen wesentlich robuster, denn es können bei einem Polymer als Fördermittel noch geschmolzene Polymerpartikel (kleine Klumpen) noch Fremdpartikel in die Schmiernut im Gleitlager gelangen. Der Schmierstrom wird daher weit weniger blockiert, wodurch die Ausfallwahrscheinlichkeit der erfindungsgemässen Zahnradpumpe deutlich geringer ist.

Eine Ausführungsvariant der erfindungsgemässen Zahnradpumpe zeichnet sich dadurch aus, dass der Abstand zwischen der Stirnseite der Gleitlager und der jeweiligen Fülltasche 5% bis 10%, vorzugsweise 7%, der Gleitlagerlänge beträgt.

Weitere Ausführungsvarianten der erfindungsgemässen Zahnradpumpe bestehen darin, dass die Stegbreite D 1% bis 10%, vorzugsweise 3%, der Gleitlagerlänge L beträgt.

Weitere Ausführungsvarianten der erfindungsgemässen Zahnradpumpe bestehen darin, dass die Fülltasche in axialer Richtung in Bezug auf die Wellenachse eine maximale Breite aufweist, die 5% bis 20%, vorzugsweise 10%, der Gleitlagerlänge beträgt.

Noch weitere Ausführungsvarianten der erfindungsgemässen Zahnradpumpe bestehen darin, dass die Fülltasche in Bezug auf eine durch die beiden Wellenachsen aufgespannte Ebene und in Drehrichtung der Zahnräder bei einem Winkel von 225° bis 315°, vorzugsweise bei 270°, beginnt.

Weitere Ausführungsvarianten der erfindungsgemässen Zahnradpumpe bestehen darin, dass die Fülltasche in Bezug auf eine durch die beiden Wellenachsen aufgespannte Ebene und in Drehrichtung der Zahnräder bei einem Winkel von 315° bis 360°, vorzugsweise bei 330°, endet.

Weitere Ausführungsvarianten der erfindungsgemässen Zahnradpumpe bestehen darin, dass ein Querschnitt im Übergangsbereich von der Fülltasche zur Schmiernut stetig ausgebildet ist.

Weitere Ausführungsvarianten der erfindungsgemässen Zahnradpumpe bestehen darin, dass die Schmiernut in einem spitzen Winkel in Bezug auf die Wellenachse in Richtung Gleitlagerende verläuft.

Weitere Ausführungsvarianten der erfindungsgemässen Zahnradpumpe bestehen darin, dass die Schmiernut bis ans Gleitlagerende verläuft.

Weitere Ausführungsvarianten der erfindungsgemässen Zahnradpumpe bestehen darin, dass mindestens einer der Lagerzapfen zumindest über einen Teil seiner axialen Erstreckung einen Lagerzapfendurchmesser aufweist, der im Bereich von 90% bis 100% eines Fusskreisdurchmessers der Verzahnung des zugehörenden Zahnrades liegt.

Schliesslich umfasst die vorliegende Erfindung eine Verwendung der Zahnradpumpe nach einer oder mehrerer der vorstehend genannten Ausführungsvarianten zur Förderung von hochviskosen Fördermedium, wie Polymer, mit einem Massenprozentanteil von Füllstoffen (z.B. Titandioxid TiO₂, Calciumcarbonat, Holzmehl, Stein, Kreide, Talg, Talkum, Silicate, Kohlenstoffe, insbesondere in Form von Russ) von über 60% an der Gesamtmasse Fördermedium.

Die erwähnten Ausführungsvarianten der vorliegenden Erfindung lassen sich in beliebiger Reihenfolge kombinieren. Lediglich diejenigen Kombinationen von Ausführungsvarianten sind ausgeschlossen, die durch die Kombination zu einem Widerspruch führen würden.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen:
- Fig. 1: ein bekanntes Zahnrad mit Lagerzapfen für eine erfindungsgemässe Zahnradpumpe in perspektivischer Darstellung,
- Fig. 2: einen Schnitt quer zur Wellenachse gemäss Schnittlinie B-B in Fig. 3 durch ein erfindungsgemässes Gleitlager,
- Fig. 3: einen Schnitt durch die Wellenachse gemäss Schnittlinie C-C in Fig. 2 durch das erfindungsgemässe Gleitlager gemäss Fig. 2 und
- Fig. 4: eine Draufsicht auf eine in das erfindungsgemässe Gleitlager eingearbeitete Fülltasche mit anschliessender Schmiernut.

### DETAILLIERTE BESCHREIBUNG DER ERFINDUNG

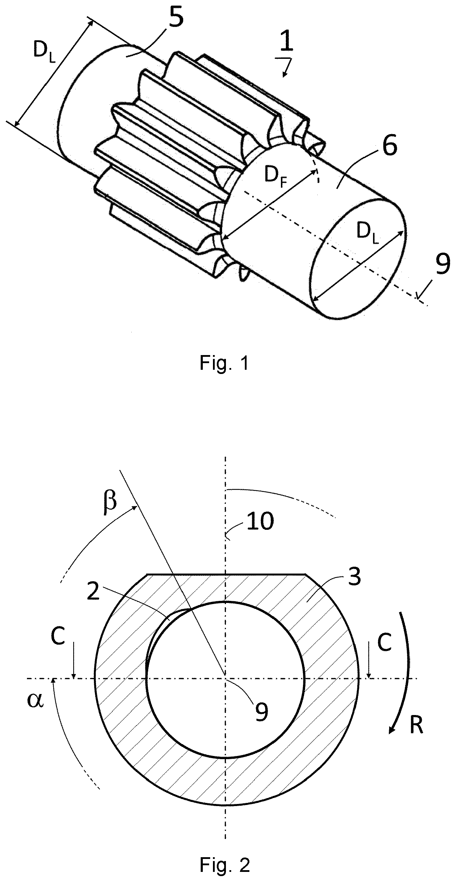

Fig. 1 zeigt eine perspektivische Darstellung eines an sich bekannten Zahnrades 1 mit Lagerzapfen 5 und 6 für eine erfindungsgemässe Zahnradpumpe. Die Lagerzapfen 5 und 6 weisen über einen Teil ihrer axialen Erstreckung einen Lagerzapfendurchmesser D_{L} auf, der annähernd so gross ist wie ein Fusskreisdurchmesser D_{F} der Verzahnung. Zumindest liegt der Lagerzapfendurchmesser D_{L} im Bereich von 90% bis 100% des Fusskreisdurchmessers D_{F}. Selbstverständlich gilt dies auch für die in Fig. 1 nicht dargestellten Lagerzapfen des zweiten Zahnrades.

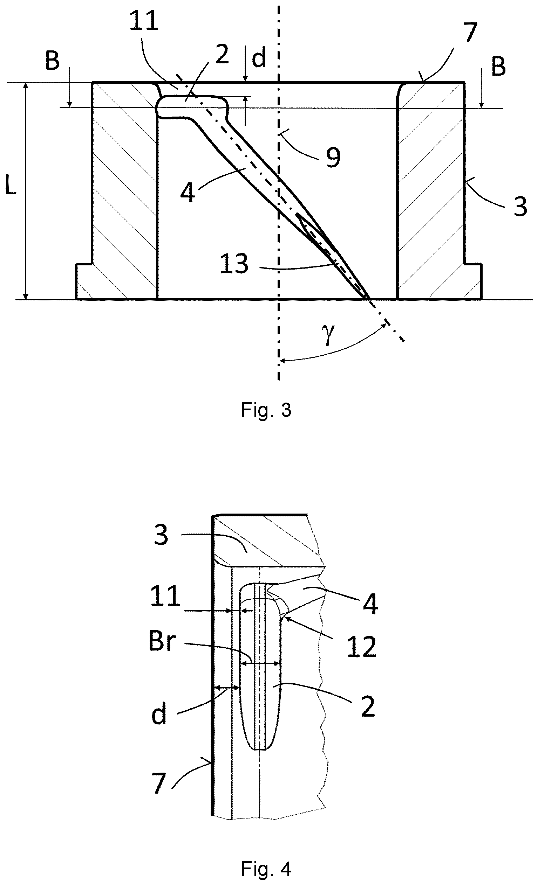

Fig. 2 zeigt einen Querschnitt durch ein erfindungsgemässes Gleitlager 3. Die Schnittfläche ist quer zur Wellenachse 9 und mittig durch eine erfindungsgemässe Fülltasche 2 gelegt, die in die Gleitfläche des Gleitlagers 3 gemäss der vorliegenden Erfindung eingearbeitet ist. Die Schnittfläche ist auch in der noch zu erläuternden Fig. 3 eingezeichnet und dort mit Schnittfläche B-B bezeichnet.

Wie bereits aus Fig. 2 erkennbar ist, ist die Fülltasche 2 von einer Zahnrad-seitigen Stirnfläche 7 des Gleitlagers beabstandet, so dass ein noch zu erläuternder Steg 11 mit radialer Ausdehnung entsprechend der Gleitfläche des Gleitlagers 3 vorhanden ist.

Die Position der Fülltasche 2 wird im Folgenden durch Winkelangaben um die Wellenachse 9 definiert, d.h. die Wellenachse 9 ist im dargestellten Schnitt gemäss Fig. 2 als Ursprung definiert. Ferner sind Winkel in Bezug auf eine Winkelbezugsebene 10 angegeben, die durch die beiden Wellenachsen der Zahnradpumpe aufgespannt wird. In Fig. 2, in der ein Schnitt quer zur Wellenachse 9 dargestellt ist, ist die Bezugsebene 10 als eine nach oben verlaufende Linie ersichtlich, wobei die Bezugsrichtung für Winkelangaben (0°-Winkel) ein Strahl ist, der einerseits vom Ursprung (Wellenachse 9) ausgeht und der andererseits senkrecht durch die zweite Wellenachse (in Fig. 2 nicht dargestellt) führt. In Rotationsrichtung R der Welle angegebene Winkel sind dabei positiv und entgegen der Rotationsrichtung sind die Winkel somit negativ.

Ausgehend von diesen Definitionen kann ein Beginn der Fülltasche 2 mit einem Startwinkel α und das Ende der Fülltasche 2 mit einem Endwinkel β angegeben werden. Es hat sich erwiesen, dass bei einer ersten Ausführungsvariante der Startwinkel α in einem Bereich von 225° bis 315° liegt, wobei bei einer spezifischen Ausführungsvariante der Startwinkel α gleich 270° ist. Der Endwinkel β liegt in einem Bereich von 315° bis 360°, wobei bei einer spezifischen Ausführungsvariante der Endwinkel β gleich 330° ist.

Die Fülltasche 2 weist bei einer Ausführungsvariante der vorliegenden Erfindung zu Beginn, d.h. im Bereich des Startwinkels α, einen kleinen Querschnitt auf, der mit zunehmendem Winkel grösser wird und der hin zum Endwinkel β wiederum abnimmt. Dies ist bereits aus dem in Fig. 2 dargestellten Schnitt durch die Fülltasche 2 deutlich erkennbar.

Fig. 3 zeigt einen Schnitt durch die Wellenachse 9 gemäss der in Fig. 2 angegebenen Schnittebene C-C durch das erfindungsgemässe Gleitlager 3. Deutlich erkennbar ist die Fülltasche 2 und die mit dieser kommunizierenden Schmiernut 4, welche bei der gezeigten Ausführungsvariante in einem Winkel γ in Bezug zur Wellenachse 9 des Gleitlagers 3 in die Gleitfläche des Gleitlagers 3 eingearbeitet ist. Die Schmiernut 4 hat die Aufgabe, das Gleitlager 3 ausreichend mit Schmiermittel - d.h. Fördermedium - zu versorgen, damit ein Schmierfilm zwischen Welle und Gleitlager - im so genannten Schmierspalt - nicht abreisst. Hierzu ist die Schmiernut 4 verjüngend ausgestaltet, d.h. ihr Querschnitt, der zu Beginn mit dem Querschnitt der Fülltasche 2 übereinstimmt, nimmt hin zur Dichtseite ab. In der in Fig. 3 dargestellten Ausführungsvariante der Erfindung ist im letzten Drittel der Schmiernut 4 eine so genannten Schmutznut 13 eingearbeitet, die im Wesentlichen einen konstanten Querschnitt aufweist und nach «hinten hin» offen ist, und dafür sorgt, dass Fremdpartikel aus dem Gleitlager 3 ausgeschwemmt werden. Der Querschnitt der Schmutznut wird daher derart bemessen, dass die grössten zu erwarteten Fremdpartikel im Fördermedium ausgeschwemmt werden können. Somit kann ein Verstopfen der Schmutznut und damit auch der Schmiernut 4 verhindert werden.

In Fig. 4 ist eine Draufsicht auf die in das erfindungsgemässe Gleitlager 3 eingearbeitete Fülltasche 2 dargestellt. Ein Teil der mit der Fülltasche 2 verbundenen Schmiernut 4 ist ebenfalls ersichtlich.

Von entscheidender Bedeutung für die vorliegende Erfindung ist der Umstand, dass die Fülltasche 2 von der Stirnseite des Gleitlagers 3 so weit beabstandet ist, dass ein Steg 11 mit einer axialen Ausdehnung entsprechend der Oberfläche des Gleitlagers 3 bestehen bleibt. Damit ist gewährleitet, dass Fremdkörper, die grösser sind als der Dichtspalt, nicht in die Fülltasche 2 und damit auch nicht in die Schmiernut 4 gelangen können. Mithin kann ein Verstopfen der Schmiernut 4 weitgehend verhindert werden, was zu einer wesentlich geringeren Ausfallwahrscheinlichkeit der Zahnradpumpe führt. Die erfindungsgemässe Zahnradpumpe ist damit wesentlich robuster als bekannte Zahnradpumpen.

Mit der erfindungsgemässen Zahnradpumpe können daher auch Fördermedien, wie beispielsweise Polymerschmelzen mit einem hohen Anteil an Feststoffen oder mit Feststoffen oberhalb einer kritischen Grösse (Fremdpartikel) bestens verarbeitet werden, was bis heute nicht der Fall war. Mit dem Steg 11 wird verhindert, dass zu viele oder zu grosse Fremdpartikel in den engen Schmierspalt zwischen Welle und Gleitlager 3 gelangen können. Der Steg 11 wirkt somit als eine Art Filter, der lediglich Fremdpartikel bis zu einer gewissen Grösse passieren lässt. Wird die Schmiernut 4 und die allenfalls vorhandene Schmutznut entsprechend der Grösse der gerade noch durchgelassenen Fremdpartikel dimensioniert, so wird eine überaus robuste Zahnradpumpe erhalten, denn ein Verstopfen der Schmiernut 4 und damit ein Abbrechen des Schmierfilmes im Gleitlager 3 werden verhindert.

Die Geometrie der Fülltasche 2 ist so gestaltet, dass sie in Rotationsrichtung der Welle zunächst tiefer wird, d.h. der Querschnitt nimmt in Rotationsrichtung der Welle zu.

Bei weiteren Ausführungsvarianten der vorliegenden Erfindung weist die Fülltasche 2 in axialer Richtung in Bezug auf die Wellenachse 9 eine maximale Breite Br auf, die 5% bis 20%, vorzugsweise 10%, der Gleitlagerlänge L beträgt. Hierbei kann ein Abstand d zwischen der Stirnseite der Gleitlager 3 und der jeweiligen Fülltasche 2 beispielsweise 5% bis 10%, vorzugsweise 7% der Gleitlagerlänge L betragen. Der Abstand d kann beispielsweise über einen wesentlichen Teil der abgewickelten Ausdehnung der Fülltasche 2, d.h. über mehr als 50%, insbesondere über mehr als 80% der abgewickelten Ausdehnung der Fülltasche 2 eingehalten werden. Ferner kann der Abstand d einen allfälligen Radius bei einem abgerundeten Übergang von der Stirnseite zur Gleitlageroberfläche umfassen. Wichtig ist bei einem Vorhandensein eines abgerundeten Überganges von der Stirnseite zur Gleitlageroberfläche, dass der Steg 11 eine Stegbreite D in axialer Richtung auf Niveau Gleitlageroberfläche aufweist, wobei die Stegbreite D, wobei die Stegbreite D mindestens 1% bis 10%, vorzugsweise 3%, der Gleitlagerlänge L beträgt.

### BEZUGSZEICHENLISTE

- 1: Zahnrad
- 2: Fülltasche
- 3: Gleitlager
- 4: Schmiernut
- 5,6: Lagerzapfen
- 7: Zahnrad-seitige Stirnfläche
- R: Rotationsrichtung der Welle
- 9: Wellenachse
- 10: Winkelbezugsebene
- 11: Steg
- 12: Übergangsbereich
- 13: Schmutznut
- α: Startwinkel
- β: Endwinkel
- γ: Neigewinkel
- D_{L}: Lagerzapfendurchmesser
- D_{F}: Fusskreisdurchmesser
- L: Gleitlagerlänge
- Br: Breite
- d: Abstand der Fülltasche von der Stirnseite des Gleitlagers
- D: Stegbreite

## Patentansprüche

1. Zahnradpumpe mit ineinandergreifenden, von einem Gehäuse umschlossenen Zahnrädern (1) mit auf Wellenachsen (9) angeordneten, jeweils seitlich von den Zahnrädern (1) abstehenden Lagerzapfen (5, 6), die im Gehäuse mittels Gleitlager (3), aufweisend eine Gleitlagerlänge (L), gelagert sind, wobei die Gleitlager (3) Fördermedium-geschmiert sind, **dadurch gekennzeichnet,**
- **dass** in die Gleitlager (3) jeweils eine Fülltasche (2) mit radialer Ausdehnung im Bereich einer Pumpendruckseite eingearbeitet ist, wobei die Fülltasche (2) von einer zahnradseitigen Stirnseite (7) des jeweiligen Gleitlagers (3) um einen Abstand (d) beabstandet ist, so dass ein Steg (11) mit einer Stegbreite (D) mit axialer Ausdehnung entsprechend einer Gleitlageroberfläche bestehend ist, und
- **dass** in den Gleitlagern (3) je eine Schmiernut (4) mit, ausgehend von einem zahnradseitigen Ende hin zu einem Gleitlagerende, einem verjüngenden Querschnitt vorhanden ist, wobei die Schmiernut (4) zahnradseitig bei der Fülltasche (2) beginnt und mit dieser kommuniziert.

2. Zahnradpumpe nach Anspruch 1, **dadurch gekennzeichnet, dass** der Abstand (d) zwischen der Stirnseite (7) der Gleitlager (3) und der jeweiligen Fülltasche (2) 5% bis 10%, vorzugsweise 7%, der Gleitlagerlänge (L) beträgt.

3. Zahnradpumpe nach Anspruch 1 oder 2, **dadurch gekennzeichnet, dass** die Stegbreite (D) mindestens 1% bis 10%, vorzugsweise 3%, der Gleitlagerlänge (L) beträgt.

4. Zahnradpumpe nach einem der vorangehenden Ansprüche, **dadurch gekennzeichnet, dass** die Fülltasche (2) in axialer Richtung in Bezug auf die Wellenachse (9) eine maximale Breite (Br) aufweist, die 5% bis 20%, vorzugsweise 10%, der Gleitlagerlänge (L) beträgt.

5. Zahnradpumpe nach einem der vorangehenden Ansprüche, **dadurch gekennzeichnet, dass** die Fülltasche (2) in Bezug auf eine durch die beiden Wellenachsen (9) aufgespannte Ebene und in Drehrichtung der Zahnräder bei einem Winkel von 225° bis 315°, vorzugsweise bei 270°, beginnt.

6. Zahnradpumpe nach einem der vorangehenden Ansprüche, **dadurch gekennzeichnet, dass** die Fülltasche (2) in Bezug auf eine durch die beiden Wellenachsen (9) aufgespannte Ebene und in Drehrichtung der Zahnräder (1) bei einem Winkel von 315° bis 360°, vorzugsweise bei 330°, endet.

7. Zahnradpumpe nach einem der vorangehenden Ansprüche, **dadurch gekennzeichnet, dass** ein Querschnitt im Übergangsbereich (12) von der Fülltasche (2) zur Schmiernut (4) stetig ausgebildet ist.

8. Zahnradpumpe nach einem der vorangehenden Ansprüche, **dadurch gekennzeichnet, dass** die Schmiernut (4) in einem spitzen Winkel (γ) in Bezug auf die Wellenachse (9) in Richtung Gleitlagerende verläuft.

9. Zahnradpumpe nach einem der vorangehenden Ansprüche, **dadurch gekennzeichnet, dass** die Schmiernut (4) bis ans Gleitlagerende verläuft.

10. Zahnradpumpe nach einem der vorangehenden Ansprüche, **dadurch gekennzeichnet, dass** mindestens einer der Lagerzapfen (5, 6) zumindest über einen Teil seiner axialen Erstreckung einen Lagerzapfendurchmesser (D_{L}) aufweist, der im Bereich von 90% bis 100% eines Fusskreisdurchmessers (D_{F}) der Verzahnung des zugehörenden Zahnrades (1) liegt.

11. Verwendung der Zahnradpumpe nach einem der vorangehenden Ansprüche zur Förderung von hochviskosen Fördermedium, wie Polymer, mit einem Massenprozentanteil von anorganischen Füllstoffen an Gesamtmasse Fördermedium von über 60%.

## Claims

1. Gear pump with intermeshing gear wheels (1) enclosed by a housing with bearing journals (5, 6) arranged on shaft axes (9), each projecting laterally from the gear wheels (1), which are mounted in the housing by means of slide bearings (3), having a slide bearing length (L), the slide bearings (3) being lubricated with pumped medium, **characterized in that**
- a filling pocket (2) with radial expansion is incorporated in each of the slide bearings (3) in the region of a pump pressure side, the filling pocket (2) being spaced apart from a gear-side end face (7) of the respective slide bearing (3) by a distance (d), so that a bar (11) with a bar width (D) with axial expansion corresponding to a slide bearing surface is formed, and **in that**
- a lubricating groove (4) with a tampering cross-section is provided in each of the slide bearings (3), the lubricating groove (4) starting from an end on the gearwheel side towards a slide bearing end and starting at the filling pocket (2) on the gearwheel side and communicating therewith.

2. Gear pump according to claim 1, **characterized in that** the distance (d) between the gear-side end face (7) of the slide bearings (3) and the respective filling pocket (2) is 5% to 10%, preferably 7%, of the slide bearing length (L).

3. Gear pump according to claim 1 or 2, **characterized in that** the bar width (D) is at least 1% to 10%, preferably 3%, of the slide bearing length (L).

4. Gear pump according to one of the preceding claims, **characterized in that** the filling pocket (2) has a maximum width (Br) in the axial direction with respect to the shaft axis (9) which is 5% to 20%, preferably 10%, of the slide bearing length (L).

5. Gear pump according to one of the preceding claims, **characterized in that** the filling pocket (2) starts at an angle of 225° to 315°, preferably at 270°, with respect to a plane spanned by the two shaft axes (9) and in the direction of rotation of the gear wheels.

6. Gear pump according to one of the preceding claims, **characterized in that** the filling pocket (2) ends at an angle of 315° to 360°, preferably at 330°, with respect to a plane spanned by the two shaft axes (9) and in the direction of rotation of the gear wheels (1).

7. Gear pump according to one of the preceding claims, **characterized in that** a cross-section in the transition region (12) from the filling pocket (2) to the lubrication groove (4) is formed continuously.

8. Gear pump according to one of the preceding claims, **characterized in that** the lubrication groove (4) runs at an acute angle (γ) with respect to the shaft axis (9) in the direction of the slide bearing end.

9. Gear pump according to one of the preceding claims, **characterized in that** the lubricating groove (4) extends to the end of the slide bearing.

10. Gear pump according to one of the preceding claims, **characterized in that** at least one of the journals (5, 6) has, at least over part of its axial extent, a journal diameter (D_{L}) which lies in the range from 90% to 100% of a root circle diameter (D_{F}) of the toothing of the associated gear wheel (1).

11. Use of the gear pump according to one of the preceding claims for conveying highly viscous conveying medium, such as polymer, with a mass percentage of inorganic fillers in total mass of conveying medium of more than 60%.

## Revendications

1. Pompe à engrenages avec des roues dentées (1) s'engrenant les unes dans les autres et entourées d'un boîtier, avec des tourillons (5, 6) disposés sur des axes d'arbre (9) et dépassant respectivement latéralement des roues dentées (1), qui sont logés dans le boîtier au moyen de paliers lisses (3) présentant une longueur de palier lisse (L), les paliers lisses (3) étant lubrifiés par le fluide refoulé, **caractérisée**
- **en ce qu'**une poche de remplissage (2) à extension radiale est usinée dans chacun des paliers lisses (3) dans la zone d'un côté de refoulement de pompe, la poche de remplissage (2) étant espacée d'une distance (d) d'une face frontale (7) côté roue dentée du palier lisse (3) respectif, de sorte qu'une nervure (11) d'une largeur de nervure (D) à extension axiale correspondant à une surface de palier lisse est constituée, et
- **en ce que** dans chacun des paliers lisses (3) se trouve une rainure de lubrification (4) dont la section se rétrécit en partant d'une extrémité côté roue dentée vers une extrémité du palier lisse, la rainure de lubrification (4) commençant côté roue dentée à la poche de remplissage (2) et communiquant avec celle-ci .

2. Pompe à engrenages selon la revendication 1, **caractérisée en ce que** la distance (d) entre la face frontale (7) des paliers lisses (3) et la poche de remplissage (2) respective représente 5 % à 10 %, de préférence 7 %, de la longueur (L) du palier lisse.

3. Pompe à engrenages selon la revendication 1 ou 2, **caractérisée en ce que** la largeur de nervure (D) représente au moins 1% à 10%, de préférence 3%, de la longueur du palier lisse (L).

4. Pompe à engrenages selon l'une des revendications précédentes, **caractérisée en ce que** la poche de remplissage (2) présente, dans la direction axiale par rapport à l'axe de l'arbre (9), une largeur maximale (Br) qui est comprise entre 5% et 20%, de préférence 10%, de la longueur du palier lisse (L).

5. Pompe à engrenages selon l'une des revendications précédentes, **caractérisée en ce que** la poche de remplissage (2) commence à un angle de 225° à 315°, de préférence à 270°, par rapport à un plan défini par les deux axes d'arbre (9) et dans le sens de rotation des roues dentées.

6. Pompe à engrenages selon l'une des revendications précédentes, **caractérisée en ce que** la poche de remplissage (2) se termine à un angle de 315° à 360°, de préférence à 330°, par rapport à un plan défini par les deux axes d'arbre (9) et dans le sens de rotation des roues dentées (1) .

7. Pompe à engrenages selon l'une des revendications précédentes, **caractérisée en ce qu'**une section transversale dans la zone de transition (12) entre la poche de remplissage (2) et la rainure de lubrification (4) est réalisée de manière continue.

8. Pompe à engrenages selon l'une des revendications précédentes, **caractérisée en ce que** la rainure de lubrification (4) s'étend selon un angle aigu (γ) par rapport à l'axe de l'arbre (9) en direction de l'extrémité du palier lisse.

9. Pompe à engrenages selon l'une des revendications précédentes, **caractérisée en ce que** la rainure de lubrification (4) s'étend jusqu'à l'extrémité du palier lisse.

10. Pompe à engrenages selon l'une des revendications précédentes, **caractérisée en ce qu'**au moins l'un des tourillons (5, 6) présente, au moins sur une partie de son extension axiale, un diamètre de tourillon (DL) qui se situe dans la plage de 90% à 100% d'un diamètre de pied de cercle (DF) de la denture de la roue dentée (1) correspondante.

11. Utilisation de la pompe à engrenages selon l'une des revendications précédentes pour le refoulement d'un fluide à haute viscosité, tel qu'un polymère, avec un pourcentage massique de charges inorganiques par rapport à la masse totale du fluide refoulé supérieur à 60 %.
